# EUROPÄISCHE PATENTSCHRIFT

(11) **EP 1 886 842 B1**
(45) Veröffentlichungstag und Bekanntmachung des Hinweises auf die Patenterteilung: **13.08.2014**
(21) Anmeldenummer: 07011230.5
(22) Anmeldetag: 08.06.2007
(51) Int. Cl.: B60C 9/20, B60C 9/26

(54) **Fahrzeugluftreifen für Schwerlastfahrzeuge mit Faltgürtel**
Pneumatic tyres for heavy vehicles with folded belt
Pneumatique radial pour véhicules poids lourds avec armature de sommet continuée et pliée

(30) Priorität: 07.08.2006 DE 102006037114
(43) Veröffentlichungstag der Anmeldung: 13.02.2008
(73) Patentinhaber: Continental Reifen Deutschland GmbH, 30165 Hannover (DE)
(72) Erfinder: Fries, Volkmar, 31707 Bad Eilsen (DE)
(74) Vertreter: Finger, Karsten

(56) Entgegenhaltungen:
- WO-A1-2005/113258
- DE-A1- 2 349 060
- DE-A1- 2 719 798
- JP-A- 2004 322 783

## Beschreibung

*Die Erfindung betrifft einen Fahrzeugluftreifen für Schwerlastfahrzeuge in Radialbauart mit einem mindestens dreilagigen Gürtelverband welcher Festigkeitsträger aus Stahlkord oder einem Material vergleichbar hoher Steifigkeit und Festigkeit enthält und zumindest eine 0°-Lage mit in oder annähernd in Reifenumfangsrichtung verlaufenden Festigkeitsträgern aufweist, wobei die Festigkeitsträger in den sonstigen Gürtellagen einen Winkel von mindestens 10° mit der Reifenumfangsrichtung einschließen, wobei eine der Gürtellagen eine Faltgürtellage ist und der Gürtelverband zumindest eine weitere herkömmlich ausgeführte Gürtellage enthält, zu welchen eine unmittelbar an die Faltgürtellage anschließende die radial äußerste Gürtellage bildende Gürtellage gehört, wobei die Faltgürtellage, abgesehen von höchstens einer als weitere Gürtellage vorgesehenen Lage, die breiteste Gürtellage ist und von einem durchgehenden Lagenabschnitt oder von zwei mittig beabstandeten Lagenabschnitten seitlich rückgefaltete Lagenabschnitte aufweist.*

Aus der WO 2005/113258 A1 ist ein Fahrzeugluftreifen mit einem Gürtelverband bekannt, welcher eine Faltgürtellage enthält, zwischen deren Lagenabschnitten eine 0°-Lage und eine Arbeitslage angeordnet sind, welche Festigkeitsträger aufweist, die mit der Umfangsrichtung des Reifens einen Winkel von 10° bis 45° einschließen. Zusätzlich kann der Gürtelverband radial außerhalb und/oder radial innerhalb der Faltgürtellage eine weitere Gürtellage aufweisen. Durch die spezielle Anordnung der Arbeitslage des Gürtelverbandes innerhalb der Faltgürtellage soll die Haltbarkeit des Gürtels und damit des Reifens verbessert werden. Die DE 27 19 798 A1 betrifft einen mehrlagigen Gürtelverband für Lastkraftwagen mit wenigstens einer Faltgürtellage aus Stahlkorden und einer weiteren, ungefalteten Lage mit Textilkorden. Bei einer Ausführungsform ist die ungefaltete Textilkordlage eine 0°-Lage, die sich zwischen den Lagenabschnitten der Faltgürtellage befindet. Die Textilkordlage besteht vorzugsweise aus einem Nylonkord oder einem Aramidkord, spannt den ungefalteten Abschnitt der Faltgürtellage fest auf den Kronenbereich der Karkasse und soll den Querschnitt des Reifens flach halten. Aus der JP 2004 322783 A ist ein Fahrzeugluftreifen mit einem mehrlagigen Gürtel bekannt, bei dem eine Faltgürtellage vorgesehen ist, die aus zwei mittig beabstandeten Lagenabschnitten mit rückgefalteten Lagenabschnitten besteht. Die Faltgürtellagenteile enthalten Festigkeitsträger, die in Umfangsrichtung des Reifens verlaufen. Zwischen den Lagenabschnitten der Faltgürtellagenteile verläuft eine weitere Gürtellage, eine dritte Gürtellage ist radial außerhalb der Faltgürtellagenteile angeordnet. Diese weiteren Gürtellagen schließen mit der Umfangsrichtung des Reifens die üblichen Winkel ein. Die DE 23 49 060 A1 offenbart einen Gürtelverband für einen Fahrzeugluftreifen mit einer Faltgürtellage, deren Festigkeitsträger aus einem flexiblen Stahlkord bestehen. Diese Gürtellage ist um zwei weitere, steife Stahlkorde enthaltende Gürtellagen gefaltet, die entweder 0°-Lagen sind oder unter einem Winkel von 20° zur Längsrichtung verlaufende Stahlkorde enthalten. Zur Verbesserung der Gürtelhaltbarkeit ist neben den umgefalteten Bereich der Faltgürtellagen jeweils ein Kordschutzstreifen mit guten Dämpfungseigenschaften angeordnet.

Eine der üblichen Gürtelkonstruktionen für LKW-Reifen ist der sogenannte Dreiecksgürtel, welcher typischerweise drei oder vier Gürtellagen aufweist. Die Stahlkorde in der ersten Gürtellage schließen mit der Umfangsrichtung des Reifens einen Winkel ein, welcher zwischen 45° und 65° beträgt, die Stahlkorde in der zweiten, breitesten Gürtellage, einer sogenannten Arbeitslage, schließen einen Winkel in der Größenordnung von 10° bis 30° mit der Umfangsrichtung ein und sind gleichsteigend zu den Stahlkorden in der ersten Gürtellage angeordnet. Die Stahlkorde in der dritten Gürtellage, der zweiten Arbeitslage, schließen einen Winkel von 10° bis 30° mit der Reifenumfangsrichtung ein und sind zu den Stahlkorden in der zweiten Gürtellage gekreuzt angeordnet. In der optionalen vierten Gürtellage, die die schmalste Gürtellage ist, schließen die Stahlkorde mit der Reifenumfangsrichtung einen Winkel zwischen 10° und 30° ein, wobei die Stahlkorde entweder gleichsteigend oder gekreuzt zu den Stahlkorden in der dritten Gürtellage angeordnet sind. Es ist auch bekannt, in einem mehrlagigen, insbesondere drei- bis fünflagigen Gürtel für LKW-Reifen, zumindest eine Gürtellage vorzusehen, bei der die Stahlkorde in Reifenumfangsrichtung oder unter einem sehr kleinen Winkel, jedenfalls kleiner als 5°, zur Reifenumfangsrichtung verlaufen. Diese 0°-Lage(n) im Gürtelverband von LKW-Reifen versteift bzw. versteifen den Reifen in Umfangsrichtung und haben günstige Auswirkungen auf das Abriebs- und Fahrverhalten des Reifens. Bei relativ breiten LKW-Reifen, insbesondere bei Reifen mit Reifenbreiten größer als 385 mm, wie sie beispielsweise auf der Antriebsachse von Lastkraftwagen anstelle von Zwillingsreifen eingesetzt werden, war bislang selbst bei einem Einsatz von 0°-Lagen kein zufriedenstellendes Eigenschaftsbild bezüglich der Dauerhaltbarkeit bei gleichzeitig gleichmäßigem Abrieb im Bereich der Reifenschultem erreichbar.

Der Zielkonflikt zwischen erhöhtem Abrieb in den Schulterbereichen und der Gürtelhaltbarkeit wird mit den bisher bekannten Konstruktionen - Dreiecksgürtel sowie Dreiecksgürtel in Kombination mit umfangsorientierten Lagen (0°-Lagen) - insbesondere bei Reifenbreiten größer als 385 mm, nicht zufriedenstellend gelöst, da mit einer Verbreiterung der nicht umfangsorientierten Lagen keine ausreichende Steifigkeit in der Reifenschulter erzeugt wird und eine Verbreiterung der umfangsorientierten Lagen aufgrund der Gefahr von Stauchungen und diesen zufolge auftretenden Kordbrüchen nicht ohne weiteres möglich ist.

Um bei PKW-Reifen, sowohl Umfangs- als auch Querkräfte, die Dehnungen bzw. Stauchungen in der Ebene der Lauffläche verursachen und damit zu erhöhtem Abrieb führen, wirkungsvoller aufnehmen zu können, wurde in der DE 1 189 401 vorgeschlagen, den Laufstreifen des Reifens mit mindestens einer Lage aus im Wesentlichen quer zur Umfangsrichtung verlaufenden Drähten oder Fäden zu verstärken, welche von mindestens einer weiteren Lage, gebildet aus in Umfangsrichtung verlaufenden gummierten Fäden oder Drähten, umhüllt ist. Bei einer bevorzugten Ausführungsform soll dabei die aus quer verlaufenden Fäden oder Drähten bestehende Lage um die seitlich außenliegenden Kanten der in Umfangsrichtung verlaufende Lage aus gummierten Fäden oder Drähten geschlagen sein.

Aus der DE 24 34 760 ist ein PKW-Reifen bekannt, dessen Gürtel eine Faltgürtellage aufweist, welche metallische Festigkeitsträger enthält, die unter einem Winkel zwischen 10° und 30° zur Reifenumfangsrichtung verlaufen. Die Faltgürtellage ist von mindestens einer Textilschnurlage überdeckt, deren Schnüre in Reifenumfangsrichtung verlaufen und aus einem wärmeschrumpffähigen Material bestehen. Die in der DE 24 34 760 beschriebene Ausführung ist für eine Lösung des oben erwähnten Zielkonflikts nicht geeignet, auch weil wärmeschrumpffähige textile Korde, üblicherweise wird hier Nylon in PKW Reifen eingesetzt, nicht die für LKW Reifen notwendige Steifigkeit und Festigkeit aufweisen.

Der Erfindung liegt die Aufgabe zu Grunde, bei einem LKW-Reifen der eingangs genannten Art den Gürtelverband derart auszuführen, dass der Zielkonflikt zwischen erhöhtem Abrieb in den Schulterbereichen und der Gürtelhaltbarkeit gelöst wird. Der Reifen soll für einen Einsatz auf der Antriebsachse von LKWs als Einzelbereifung besonders gut geeignet sein.

### Diese Aufgabe wird erfindungsgemäß dadurch gelöst, dass zwischen den Lagenabschnitten der Faltgürtellage zwei 0°-Lagen angeordnet sind.

LKW-Reifen mit erfindungsgemäß ausgeführten Gürtelverbänden weisen zum Einen auch in den Reifenschultem eine hohe Umfangssteifigkeit auf, die mit den bisher bekannten technischen Ausführungen nicht erreicht wird. Dadurch wird ein gleichmäßiges Abriebbild auch in den Reifenschultern erzielt. Zum Anderen sind in den Schulterbereichen freie Gürtelkanten von Arbeitslagen vermieden, was sich besonders günstig auf die Gürtelhaltbarkeit auswirkt.

Es ist eine Vielzahl von vorteilhaften Ausführungsvarianten erfindungsgemäß ausgeführter Gürtelverbände möglich. Diese sind Gegenstände der Unteransprüche und können für bestimmte Einsatzzwecke von LKW-Reifen sowie in Abhängigkeit vom eingesetzten Festigkeitsträgermaterial besonders vorteilhaft sein, insbesondere hinsichtlich der Umfangssteifigkeit in den Reifenschultem. Bei einem *Teil* der erfindungsgemäßen Varianten ist die Faltgürtellage die breiteste der vorgesehenen Gürtellagen, was von besonderem Vorteil für die Gürtelhaltbarkeit, insbesondere auch in den Schulterbereichen des Reifens, ist.

Bei Ausführungen der Erfindung, bei denen die Faltgürtellage die zweitbreiteste Lage ist, wird als weitere Gürtellage eine herkömmliche Gürtellage in der Position der ersten Gürtellage angeordnet (Anspruch 3). In dieser Position ist eine sehr breite Gürtellage unkritisch bezüglich Kordbrüchen.

Bei einer weiteren möglichen Variante der Erfindung ist die oder eine weitere Gürtellage zwischen den Lagenabschnitten der Faltgürtellage angeordnet (Anspruch 4). Auch diese Ausführung ist besonders vorteilhaft für die Umfangssteifigkeit des Gürtelverbandes. Die in Kombination mit der oder den 0°-Lage(n) vorgesehene weitere Gürtellage kann radial außerhalb oder radial innerhalb der 0°-Lagen verlaufen.

Weitere Maßnahmen begünstigen einen gleichförmigen Abrieb und das Fahrverhalten des Reifens. Zu diesen Maßnahmen gehört, dass die Festigkeitsträger in einer weiteren Gürtellage, welche an die Faltgürtellage bzw. deren durchgehenden Lagenabschnitt angrenzt, zu den Festigkeitsträgern im durchgehenden Lagenabschnitt gekreuzt verlaufen (Anspruch 5). In diesem Zusammenhang ist es auch von Vorteil, wenn die Festigkeitsträger in der oder den weiteren Gürtellage(n) mit der Umfangsrichtung einen Winkel zwischen 10° und 60° einschließen (Anspruch 6).

Weitere Merkmale, Vorteile und Einzelheiten der Erfindung werden nun anhand der Zeichnung, die schematisch mehrere Ausführungsbeispiele darstellt, näher beschrieben. Dabei zeigen
*Fig. 1 bis Fig.* 5 Querschnitte durch einen Fahrzeugluftreifen mit unterschiedlichen Ausführungsvarianten der Erfindung und
*Fig. 6 bis Fig.* 9 Querschnitte durch Fahrzeugluftreifen, die nach dem Stand der Technik ausgeführt sind.

Die in den Zeichnungsfiguren gezeigten Fahrzeugluftreifen sind LKW-Reifen, insbesondere Reifen mit einer relativ großen Querschnittsbreite, beispielsweise der Dimension 495/45 R22.5, welche bevorzugt auf der Antriebsachse von Lastkraftwagen anstelle der bislang üblichen Zwillingsbereifung eingesetzt werden. In sämtlichen Zeichnungsfiguren sind einige Hauptbauteile bzw. Hauptbestandteile der Fahrzeugluftreifen bezeichnet, nämlich die Radialkarkasse 1, die von axial innen nach axial außen um Wulstkerne 2a in Wulstbereichen 2 verläuft, die Seitenwände 3 und der Laufstreifen 4, welcher der Einfachheit halber ohne Profilierung gezeigt ist. Zwischen der Radialkarkasse 1 und dem Laufstreifen 4 ist ein Gürtelverband eingebracht, welcher aus mehreren Lagen besteht.

Jede Gürtellage der nachfolgend näher beschriebenen Gürtelverbände besteht aus in eine Gummischicht eingebetteten Festigkeitsträgern, vorzugsweise aus Stahlkord oder einem anderen Material hoher Steifigkeit und Festigkeit, beispielsweise Aramid. Die Stahlkorde verlaufen in jeder Gürtellage parallel zueinander, unter den für Gürtellagen von LKW-Reifen üblichen gegenseitigen Abständen und sind aus mindestens 4 Teilsträngen (Filamenten) mit Durchmessern zwischen 0,15 mm und 0,40 mm aufgebaut.

Unter 0°-Lage ist eine Gürtellage zu verstehen, welche in Umfangsrichtung bzw. nahezu in Umfangsrichtung verlaufende Stahlkorde enthält. Benachbarte Gürtellagen sind dann als gleichsteigend bezeichnet, wenn die Stahlkorde, die sie enthalten, eine übereinstimmende Neigungsrichtung zur Umfangsrichtung aufweisen, wobei die Winkel, die sie mit der Umfangsrichtung einschließen, gleich groß oder unterschiedlich groß sein können. Als kreuzend oder gekreuzt sind Stahlkorde in benachbarten Gürtellagen dann bezeichnet, wenn in der einen Lage die Stahlkorde zur Umfangsrichtung in der einen Richtung geneigt verlaufen und die Stahlkorde in der anderen Lage zur Umfangsrichtung eine Neigung in die andere Richtung aufweisen.

Des Weiteren wird in der nachfolgenden Beschreibung jeweils eine Aufeinanderfolge der Gürtellagen beschrieben, bei der die der Radialkarkasse unmittelbar benachbarte Lage als erste Gürtellage bezeichnet wird. An diese Gürtellagen schließen in Richtung Laufstreifen 4 die weiteren Gürtellagen an, die beispielsweise als zweite, dritte und vierte Gürtellage bezeichnet sind.

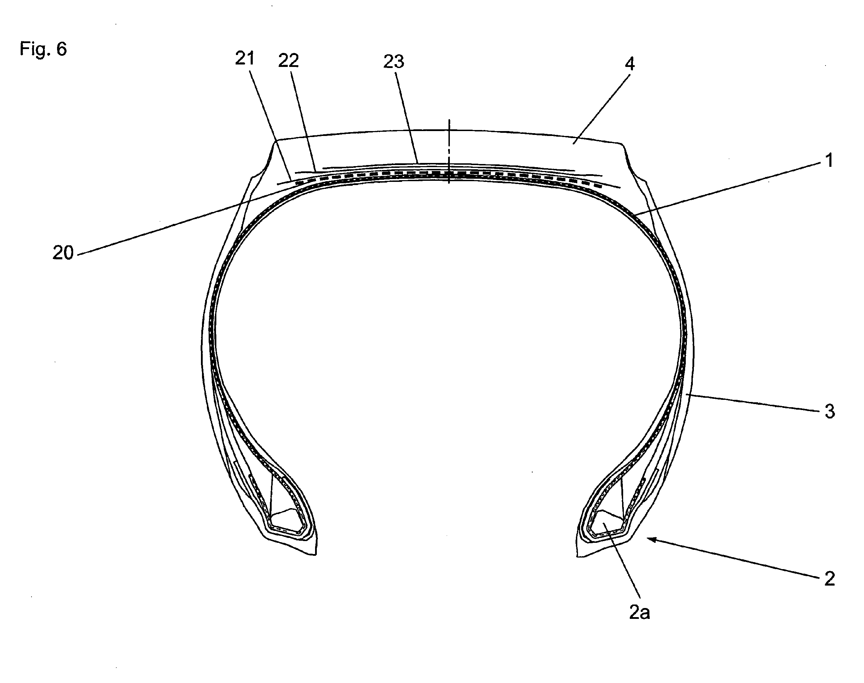

*Fig. 6 bis Fig. 9* zeigen Gürtelaufbauten bzw. Gürtelkonstruktionen aus dem Stand der Technik. Der in *Fig. 6* dargestellte Gürtelverband weist Gürtellagen 20, 21, 22 und 23 auf, wobei die Stahlkorde in der ersten Gürtellage 20 unter einem Winkel, welcher zwischen 45° bis 65° gewählt wird, zur Umfangsrichtung verlaufen. Die Stahlkorde in der zweiten Gürtellage 21 sind gleichsteigend zu jenen in der ersten Gürtellage 20 angeordnet, der Winkel den sie mit der Umfangsrichtung einschließen, wird zwischen 10° und 30° gewählt. Die dritte Gürtellage 22 enthält Stahlkorde, die ebenfalls unter einem Winkel zwischen 10° und 30° zur Umfangsrichtung verlaufen und zu den Stahlkorden in der zweiten Gürtellage 21 gekreuzt angeordnet sind. Die Stahlkorde in der vierten, radial äußersten Gürtellage 23 verlaufen unter einem Winkel von 10° bis 30° zur Umfangsrichtung, entweder gekreuzt oder gleichsteigend zu den Stahlkorden in der dritten Gürtellage 22. Diese Gürtelkonstruktion wird als Dreiecksgürtel bezeichnet. Die breiteste Gürtellage ist die zweite Gürtellage 21, die dritte Gürtellage 22 ist im Wesentlichen gleich breit zur ersten Gürtellage 20 ausgeführt und die vierte Gürtellage 23 ist die schmalste aller Gürtellagen.

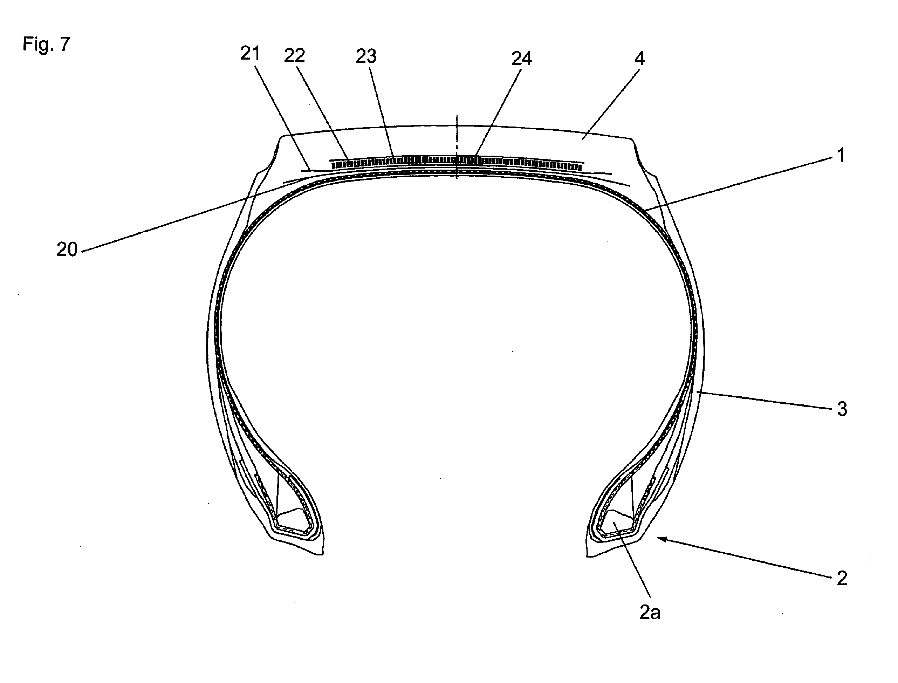

*Fig. 7* zeigt einen weiteren LKW-Reifen mit einem gemäß dem Stand der Technik ausgeführten Gürtelverband. Der gezeigte Gürtelverband weist fünf Gürtellagen 20, 21, 22, 23 und 24 auf. Die erste Gürtellage 20 enthält Stahlkorde, die unter einem Winkel zwischen 10° und 30° zur Umfangsrichtung geneigt verlaufen, die zweite Gürtellage 21 enthält Stahlkorde, die ebenfalls unter einem Winkel zwischen 10° und 30° zur Umfangsrichtung verlaufen, jedoch gekreuzt zu den Stahlkorden in der ersten Lage 20. Die dritte Lage und die vierte Lage 22, 23 sind 0°-Lagen. Die radial äußerste Lage 24 ist eine Lage, deren Stahlkorde unter einem Winkel zwischen 10° und 30° zur Umfangsrichtung orientiert sind. Anstelle der beiden 0°-Lagen 22, 23 kann auch eine einzige 0°-Lage vorgesehen sein. Die erste Gürtellage 20 ist die Breiteste von allen Gürtellagen, die nächstbreitere Gürtellage ist die zweite Gürtellage 21. Die 0°-Lagen 22 und 23 sind geringfügig schmäler als die diese abdeckende fünfte Gürtellage 24. Die 0°-Lagen zwischen den beiden Arbeitslagen 21 und 24 versteifen den Gürtelverband in Umfangsrichtung.

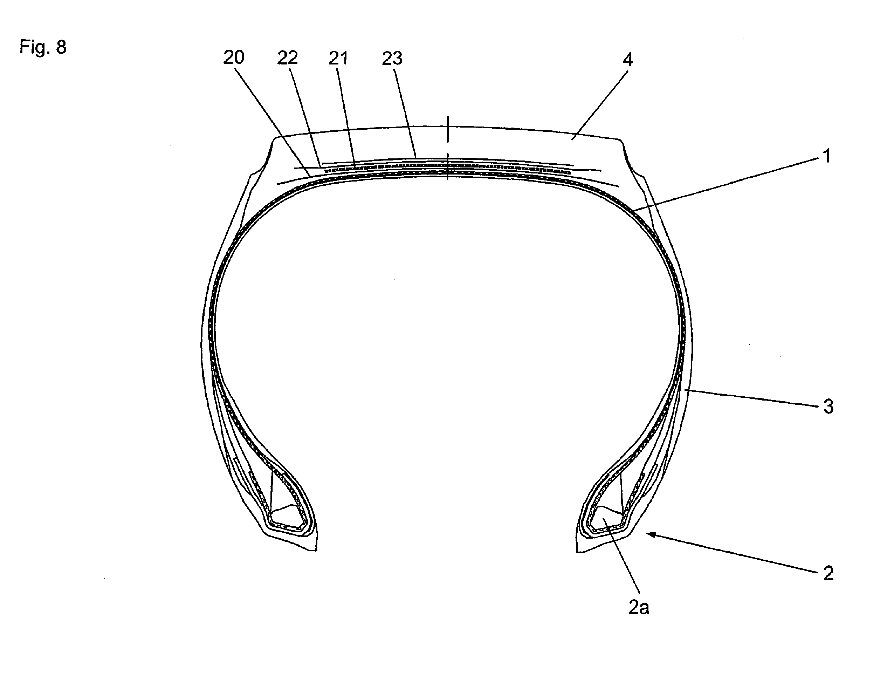

Ein weiteres Ausführungsbeispiel eines bekannten Gürtelverbandes zeigt *Fig. 8*. Die erste Gürtellage 20 enthält Stahlkorde, die unter einem Winkel zwischen 10° und 30° zur Umfangsrichtung verlaufen, die zweite Gürtellage 21 ist eine 0°-Lage, die dritte Gürtellage enthält Stahlkorde, welche unter einem Winkel zwischen 10° und 30° zur Umfangsrichtung und zu jenen in der ersten Gürtellage 20 gekreuzt verlaufen. Die radial äußerste Lage, die vierte Gürtellage 23 weist Stahlkorde auf, die einen Winkel zwischen 10° und 30° mit der Umfangsrichtung einschließen und entweder gekreuzt oder gleichsteigend zu jenen der dritten Gürtellage 22 verlaufen. Die breiteste Gürtellage 20 ist die radial Innerste, die 0°-Lage ist geringfügig schmäler als die radial äußerste Gürtellage 23 und die dritte Gürtellage 22 ist etwas schmäler als die erste Gürtellage 20. Die 0°-Lage 21 zwischen den beiden Arbeitslagen 20 und 22 entkoppelt die Lagen 20, 22 mechanisch und bedingt daher einen größeren radialen Abstand zwischen den Gürtelkanten der Lagen 20, 22.

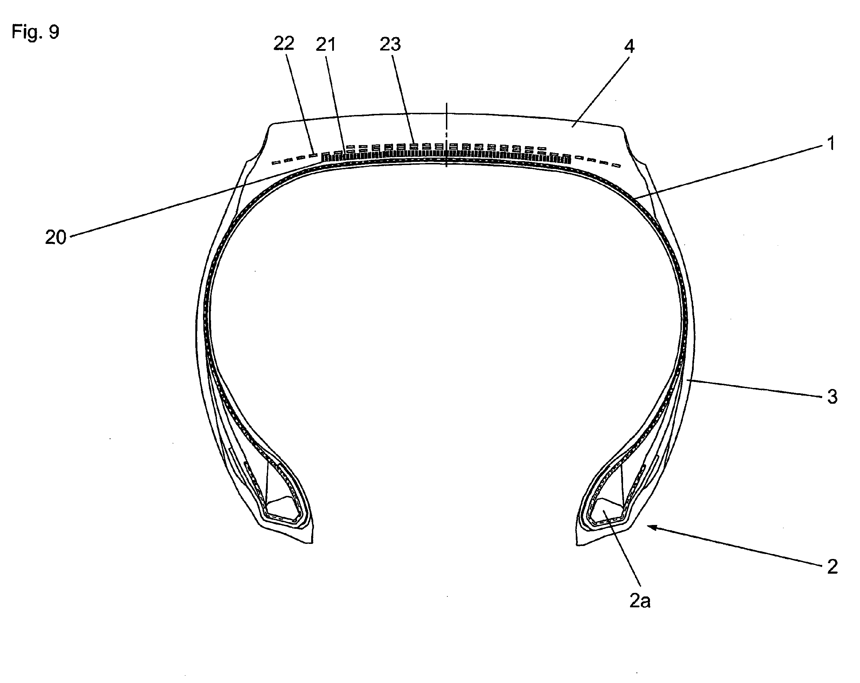

*Fig.* 9 zeigt einen weiteren Gürtelaufbau aus dem Stand der Technik mit zwei 0°-Lagen als erste und zweite Gürtellagen 20, 21, einer dritten Gürtellage 22, die die Breiteste aller Gürtellagen ist und Stahlkorde enthält, die mit der Umfangsrichtung einen Winkel zwischen 30° und 60° einschließen, wobei die radial äußerste, vierte Gürtellage 23 die schmalste Gürtellage ist und Stahlkorde enthält, die ebenfalls einen Winkel zwischen 30° und 60° mit der Umfangsrichtung einschließen, wobei diese Stahlkorde zu jenen in der dritten Gürtellage 22 gekreuzt angeordnet sind. Bei dieser bekannten Gürtelkonstruktion wird die Umfangssteifigkeit des Reifens nahezu ausschließlich über die 0°-Lagen 20, 21 sichergestellt. Im Bereich der Reifenschultem ergibt sich bei dieser bekannten Konstruktion jedoch eine unzureichende Umfangssteifigkeit, wodurch der Schulterabrieb nachteilig begünstigt wird.

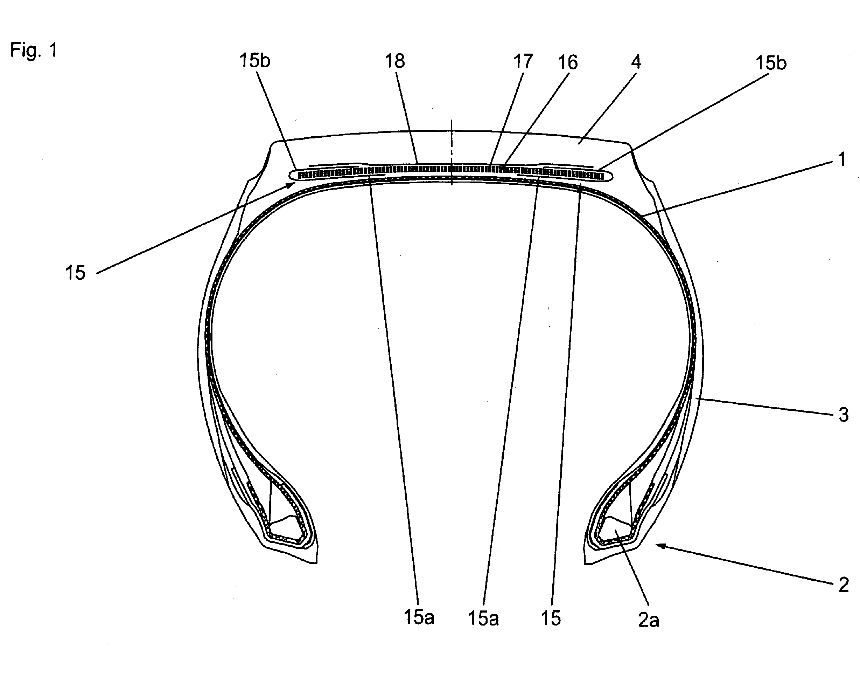

In erfindungsgemäß ausgeführten Gürtelverbänden sind zumindest eine Faltgürtellage und zumindest eine 0°-Lage vorgesehen. Fig. 1 *bis Fig.* 5 zeigen mögliche Ausführungsbeispiele erfindungsgemäß ausgeführter Gürtelverbände.

Bei der in Fig. 1 gezeigten Ausführungsvariante verlaufen der Karkasse 1 unmittelbar benachbart zwei seitliche Lagenabschnitte 15a einer zweiteiligen Faltgürtellage 15. Die Lagenabschnitte 15a sind enden unter einem gegenseitigen Abstand und gehen über Umschläge um die Ränder von zwei 0°-Lagen 16, 17 in weitere Lagenabschnitte 15b über, welche kürzer ausgeführt sind als die Lagenabschnitte 15a. Die radial äußerste Gürtellage 18 enthält Stahlkorde, die unter einem Winkel, der zwischen 10° und 60° gewählt wird, verlaufen und endet vor den Umschlägen der Faltgürtellage 15. Der Winkel, den die Stahlkorde in den Abschnitten 15a, 15b der Faltgürtellagen 15 mit der Umfangsrichtung einschließen, beträgt zwischen 10° und 60°, wobei die Stahlkorde in den Lagenabschnitten 15a zu den Stahlkorden in der vierten Gürtellage 18 gekreuzt verlaufen. Die Stahlkorde in den Lagenabschnitten 15b sind daher zu den Stahlkorden in der Gürtellage 18 gleichsteigend angeordnet. Diese Gürtelkonstruktion vermeidet freiliegende Gürtelkanten von Arbeitslagen und weist, bedingt durch die beiden 0°-Lagen, eine hohe Umfangssteifigkeit, auch in den Reifenschultern, auf. Bei dieser Gürtelkonstruktion kann bei leichteren LKW-Reifen auch nur eine 0°-Lage vorgesehen werden.

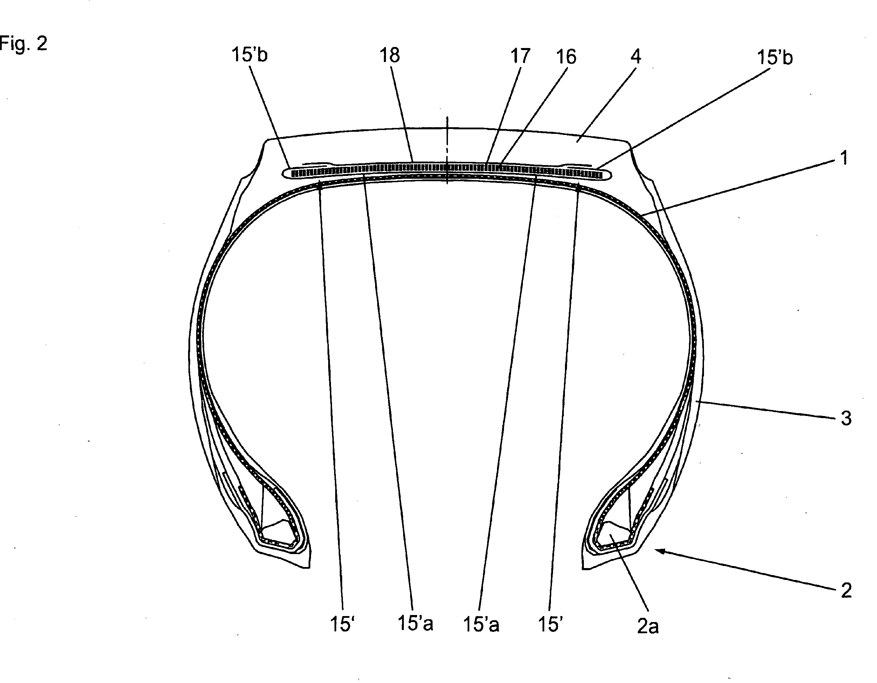

Bei der in Fig. 2 gezeigten Ausführungsform ist die Faltgürtellage 15' einteilig ausgeführt und weist einen durchgehenden, der Radialkarkasse 1 benachbart verlaufenden Lagenabschnitt 15'a und nach dem Umschlagen um die seitlichen Kanten von zwei 0°-Lagen 16, 17 zwei Lagenabschnitte 15'b auf. Der weitere Aufbau dieses Gürtelverbandes entspricht jenem gemäß Fig. 1 und es sind daher auch übereinstimmende Bezugsziffern gewählt worden.

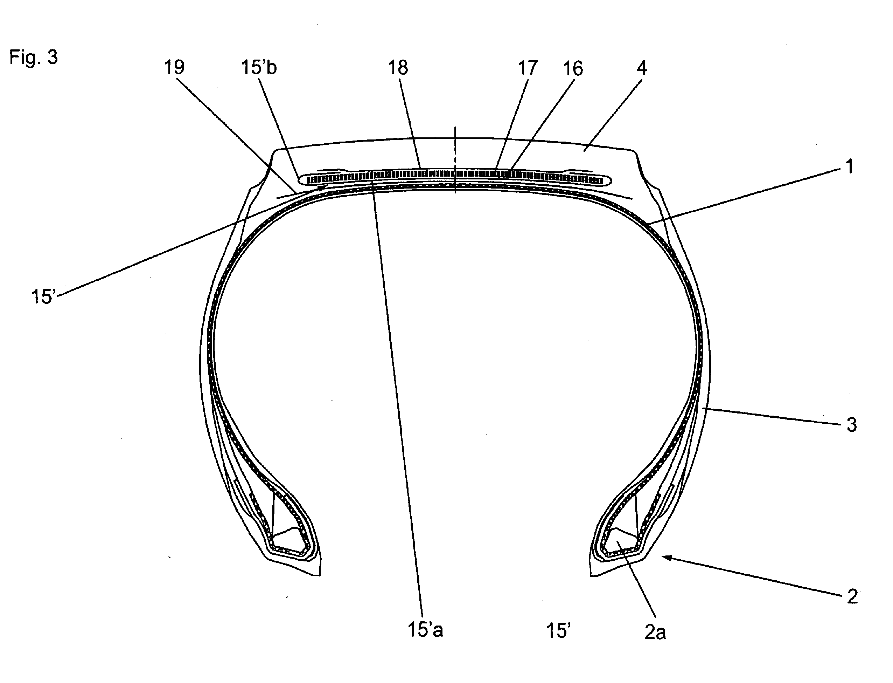

Bei der in Fig. 3 gezeigten Ausführungsvariante ist die erste Gürtellage 19 die breiteste Lage und enthält Stahlkorde, die unter einem Winkel zwischen 10° und 60° zur Umfangsrichtung verlaufen. An die erste Gürtellage 14 schließen weitere Gürtellagen 15', 16, 17 und 18 an, welche gemäß der in Fig. 2 gezeigten Ausführungsvariante ausgeführt und angeordnet sind. Dabei verlaufen die Stahlkorde in der ersten Gürtellage 19 gekreuzt zu jenen im Lagenabschnitt 15'a der Faltgürtellage 15'.

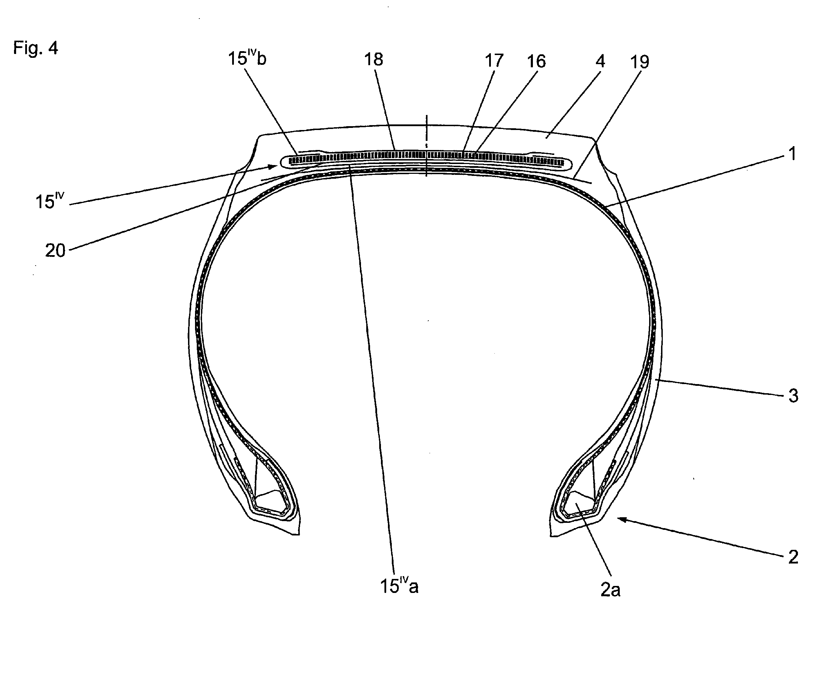

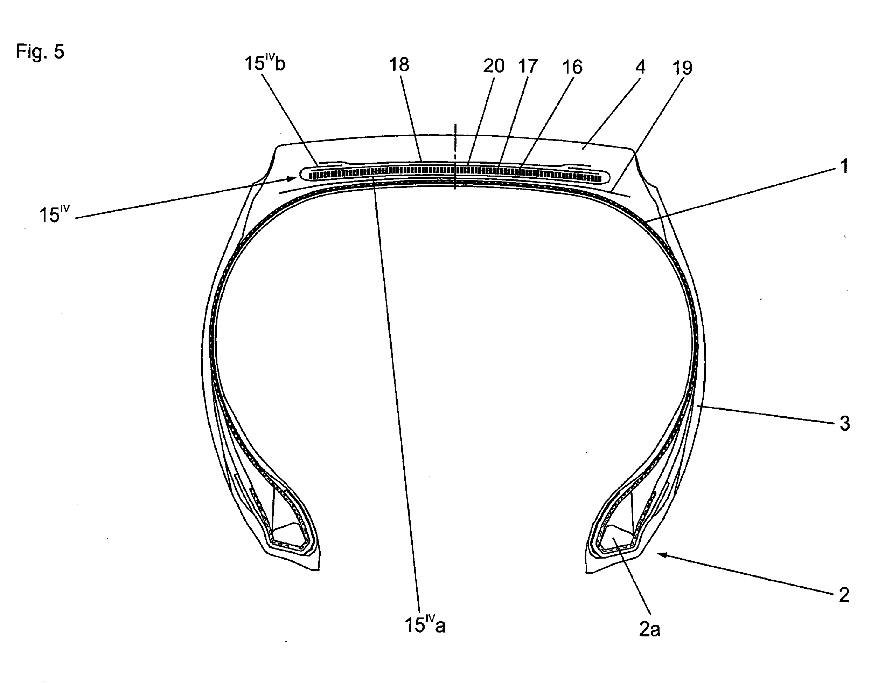

*Fig. 4* *und* *Fig. 5* zeigen Varianten eines Gürtelverbandes, bei welchem die 0°-Lagen 16, 17 zwischen den Lagenabschnitten 15^{IV}b und dem Lagenabschnitt 15^{IV} a einer Faltgürtellage 15^{IV} angeordnet sind. Die erste Gürtellage 19, welche die breiteste Gürtellage ist, enthält Stahlkorde, die mit der Umfangsrichtung einen Winkel zwischen 10° und 60° einschließen. Die an die Gürtellage 19 anschließende Faltgürtellage 15^{IV} umschließt auch die Gürtelkanten einer weiteren Gürtellage 20, welche entweder radial innerhalb (Fig. 8) oder radial außerhalb (Fig. 9) der beiden 0°-Lagen 16, 17 angeordnet ist. Die radial äußerste Gürtellage 18 ist geringfügig schmäler als die Faltgürtellage 15^{IV} und überdeckt zumindest die axial innen liegenden freien Gürtelkanten der Lagenabschnitte 15^{IV}b der Faltgürtellage 15^{IV}. Auch bei dieser Ausführungsvariante kann, je nach Einsatzzweck des Reifens, vorgesehen sein, lediglich eine 0°-Lage vorzusehen und/oder eine der Gürtellagen 18, 19 wegzulassen.

Die Erfindung ist auf die dargestellten Ausführungsvarianten nicht eingeschränkt. Insbesondere können konstruktive Maßnahmen aus den einzelnen Varianten miteinander kombiniert werden. Bei einer Faltgürtellage, deren seitlich rückgeführte Lagenabschnitte unmittelbar auf dem oder den anderen Lagenabschnitt(en) liegen, können die seitlich rückgeführten Abschnitte auch die radial weiter innen liegenden Abschnitte sein.

## Patentansprüche

1. Fahrzeugluftreifen für Schwerlastfahrzeuge in Radialbauart mit einem mindestens dreilagigen Gürtelverband, welcher Festigkeitsträger aus Stahlkord oder einem Material vergleichbar hoher Steifigkeit und Festigkeit enthält und zumindest eine 0°-Lage (16, 17) mit in oder annähernd in Reifenumfangsrichtung verlaufenden Festigkeitsträgern aufweist, wobei die Festigkeitsträger in den sonstigen Gürtellagen (15, 15', 15^{IV}, 18, 19, 20) einen Winkel von mindestens 10° mit der Reifenumfangsrichtung einschließen, wobei eine der Gürtellagen eine Faltgürtellage (15, 15', 15^{IV}) ist und der Gürtelverband zumindest eine weitere herkömmlich ausgeführte Gürtellage (17, 18, 19, 20) enthält, *zu welchen eine unmittelbar an die Faltgürtellagen (15, 15, 15^{IV}) anschließende die radial äußerste Gürtellage (18) bildende Gürtellage gehört,* wobei die Faltgürtellage (15, 15', 15^{IV}), abgesehen von höchstens einer als weitere Gürtellage (19) vorgesehenen Lage, die breiteste Gürtellage ist und von einem durchgehenden Lagenabschnitt (15'a, 15^{IV}a) oder von zwei mittig beabstandeten Lagenabschnitten (15a) seitlich rückgefaltete Lagenabschnitte (15b, 15'b, 15^{IV}b) aufweist,
**dadurch gekennzeichnet,**
**dass** zwischen den Lagenabschnitten (15a, 15b; 15'a, 15'b; 15^{IV}a, 15^{IV}b) der Faltgürtellage (15, 15', 15^{IV}) zwei 0°-Lagen (16, 17) angeordnet sind.

2. Reifen nach Anspruch 1, **dadurch gekennzeichnet, dass** die beiden 0°-Lagen (16, 17) gleich breit ausgeführt sind.

3. Reifen nach einem Anspruch 1 oder 2, **dadurch gekennzeichnet, dass** eine weitere Gürtellage (19) die erste Gürtellage ist, welche vorzugsweise die breiteste Gürtellage ist.

4. Reifen nach einem der Ansprüche 1 bis 3, **dadurch gekennzeichnet, dass** eine weitere Gürtellage (20) zwischen den Lagenabschnitten (15^{IV}a, 15^{IV}b) der Faltgürtellage (15^{IV}) angeordnet ist.

5. Reifen nach einem der Ansprüche 1 bis 4, **dadurch gekennzeichnet, dass** die weitere Gürtellage(n) (18, 19, 20), welche an die Faltgürtellage (15', 15^{IV}) bzw. deren durchgehenden Lagenabschnitt (15'a, 15^{IV}a) angrenzt bzw. angrenzen, Festigkeitsträger enthält, welche zu den Festigkeitsträgern im durchgehenden Lagenabschnitt (15'a, 15^{IV}a) gekreuzt verlaufen.

6. Reifen nach einem der Ansprüche 1 bis 5, **dadurch gekennzeichnet, dass** die Festigkeitsträger in der oder den weiteren Gürtellage(n) (18, 19, 20) mit der Umfangsrichtung einen Winkel zwischen 10° und 60° einschließen.

## Claims

1. Pneumatic vehicle tyre for heavy goods vehicles of a radial type of construction, with an at least three-ply breaker belt assembly, which contains reinforcing elements of steel cord or a material of comparable high rigidity and strength and has at least one 0° ply (16, 17) with reinforcing elements running in or approximately in the circumferential direction of the tyre, the reinforcing elements in the other belt plies (15, 15', 15^{IV}, 18, 19, 20) forming an angle of at least 10° with the circumferential direction of the tyre, one of the belt plies being a folded belt ply (15, 15', 15^{IV}) and the breaker belt assembly containing at least one further conventionally designed belt ply (17, 18, 19, 20), associated with which there is a belt ply directly adjoining the folded belt ply (15, 15', 15^{IV}) and forming the radially outermost belt ply (18), the folded belt ply (15, 15', 15^{IV}) being the widest, apart from possibly a ply provided as a further belt ply (19), and having ply portions (15b, 15'b, 15^{IV}b) folded back laterally from a continuous ply portion (15'a, 15^{IV}a) or from two ply portions (15a) spaced apart in the middle,
**characterized**
**in that** two 0° plies (16, 17) are arranged between the ply portions (15a, 15b; 15'a, 15'b; 15_{,}^{IV}a, 15^{IV}b) of the folded belt ply (15, 15', 15^{IV}).

2. Tyre according to Claim 1, **characterized in that** the two 0° plies (16, 17) are made to be of the same width.

3. Tyre according to either of Claims 1 and 2, **characterized in that** a further belt ply (19) is the first belt ply, which is preferably the widest belt ply.

4. Tyre according to one of Claims 1 to 3, **characterized in that** a further belt ply (20) is arranged between the ply portions (15^{IV}a, 15^{IV}b) of the folded belt ply (15^{IV}).

5. Tyre according to one of Claims 1 to 4, **characterized in that** the further belt ply (plies) (18, 19, 20) which is or are adjacent to the folded belt ply (15', 15^{IV}) or the continuous ply portion (15'a, 15^{IV}a) thereof contain(s) reinforcing elements, which run crosswise in relation to the reinforcing elements in the continuous ply portion (15' a, 15^{IV}a)_{.}

6. Tyre according to one of Claims 1 to 5, **characterized in that** the reinforcing elements in the further belt ply or plies (18, 19, 20) form an angle of between 10° and 60° with the circumferential direction.

## Revendications

1. Bandage pneumatique pour roue de véhicule lourd, à structure radiale présentant
un ensemble de ceinture en au moins trois couches qui contient des renforts en câble d'acier ou en un matériau de rigidité et de résistance mécanique de niveau comparable et
au moins une couche (16, 17) à 0° présentant des renforts qui s'étendent dans la direction périphérique du bandage de roue ou sensiblement dans cette direction,
les renforts formant dans les autres couches de ceinture (15, 15', 15^{IV}, 18, 19, 20) un angle d'au moins 10° par rapport à la direction périphérique du bandage de roue,
l'une des couches de ceinture étant une couche de ceinture (15, 15', 15^{IV}) rabattue et l'ensemble de ceinture contenant au moins une autre couche de ceinture (17, 18, 19, 20) réalisée de la manière habituelle et comprenant une couche de ceinture qui forme la couche de ceinture (18) radialement extérieure et qui se raccorde directement à la couche de ceinture rabattue (15, 15', 15^{IV}), la couche de ceinture rabattue (15, 15', 15^{IV}), à l'exception d'au plus une couche prévue comme autre couche de ceinture (19), étant la couche de ceinture la plus large et présentant des parties (15b, 15'b, 15^{IV}b) de couche rabattues latéralement d'une partie continue (15'a, 15^{IV}a) de couche ou de deux parties (15a) de couche écartées l'une de l'autre au milieu,
**caractérisé en ce que**
deux couches (16, 17) à 0° a sont disposées entre les parties (15a, 15b; 15'a, 15'b, 15^{IV}a, 15^{IV}b) de la couche (15, 15', 15^{IV}) de ceinture rabattue.

2. Bandage de roue selon la revendication 1, **caractérisé en ce que** les deux couches (16, 17) à 0° ont la même largeur.

3. Bandage de roue selon l'une des revendications 1 ou 2, **caractérisé en ce qu'**une autre couche de ceinture (19) forme la première couche de ceinture qui est de préférence la couche de ceinture la plus large.

4. Bandage de roue selon l'une des revendications 1 à 3, **caractérisé en ce qu'**une autre couche de ceinture (20) est disposée entre les parties (15^{IV}a, 15^{IV}b) de la couche (15^{IV}) de ceinture rabattue.

5. Bandage de roue selon l'une des revendications 1 à 4, **caractérisé en ce que** la ou les autres couches de ceinture (18, 19, 20) adjacentes à la couche (15', 15^{IV}) de ceinture rabattue ou de leur partie continue (15'a, 15^{IV}a) contiennent des renforts qui croisent les renforts prévus dans la partie continue (15'a, 15^{IV}a) de la couche.

6. Bandage de roue selon l'une des revendications 1 à 5, **caractérisé en ce que** les renforts prévus dans la ou les autres couches de ceinture (18, 19, 20) forment un angle compris entre 10° et 60° par rapport à la direction périphérique.
